Europäisches Patentamt

European Patent Office

Office européen des brevets

(11) Veröffentlichungsnummer: **0 243 857**
B1

# EUROPÄISCHE PATENTSCHRIFT

(45) Veröffentlichungstag der Patentschrift:
**16.08.90**

(51) Int. Cl.⁵: **B60N 3/08**, A24F 19/08

(21) Anmeldenummer: **87105866.5**

(22) Anmeldetag: **22.04.87**

(54) Ascher, insbesondere für Fahrzeuge.

(30) Priorität: 02.05.86 DE 3614804

(43) Veröffentlichungstag der Anmeldung:
04.11.87 Patentblatt 87/45

(45) Bekanntmachung des Hinweises auf die Patenterteilung:
16.08.90 Patentblatt 90/33

(84) Benannte Vertragsstaaten:
DE ES FR GB IT SE

(56) Entgegenhaltungen:
EP-A- 0 163 181
DE-A- 3 433 992
DE-B- 1 247 723
FR-A- 1 393 827
FR-A- 2 003 709
FR-A- 2 571 006

(73) Patentinhaber: Gebr. Happich GmbH,
Postfach 10 02 49 Clausenbrücke 1,
D-5600 Wuppertal 1(DE)

(72) Erfinder: Dabringhaus, Volker, Paul-Löbe-Strasse 55,
D-5600 Wuppertal 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf einen Ascher, insbesondere für Fahrzeuge, bestehend aus einem in einer Wandaussparung befestigbaren Gehäuse, einem darin beweglich geführten, sowohl in der eingeschobenen als auch in der herausgezogenen Lage im Gehäuse fixierten Schubteil, einem darin herausnehmbar angeordneten Aschereinsatz und einer Raste zur Sicherung des Aschereinsatzes im Schubteil, die aus einer länglichen Blattfeder besteht, mit einem Endbereich an einer Wandung des Aschereinsatzes befestigt ist und einen Rastnocken aufweist, der zur lösbaren Halterung des Aschereinsatzes im Schubteil in eine Aussparung des Schubteils eingreift und von Hand entrastbar ist.

Ein Ascher der gattungsgemäßen Art ist in der DE-A 3 433 992 gezeigt. Bei diesem bekannten Ascher kann das Schubteil zusammen mit einem darin als herausnehmbare Schale eingesetzten Aschebehälter gegen die Kraft einer ersten Feder, die gegen die Unterseite des Gehäusesdeckels wirkt, bis in eine Gebrauchslage des Aschebehälters aus dem Gehäuse herausgezogen werden. Im herausgezogenen Zustand des Schubteils läßt sich dann auch der Aschebehälter aus dem Schubteil herausziehen, indem eine im Bereich eines vorderen Griffstücks des Schubteils angeordnete, von Hand betätigbare zweite Feder von einem Anschlag wegbewegt wird. Dieser bekannte Ascher wirkt nicht sehr bedienungsfreundlich, da der Aschebehälter von Hand gegen die Kraft einer Haltefeder aus dem Gehäuse herausbewegt werden muß. Insbesondere erscheint auch die separate Herstellung und Montage einer ersten Feder zur Sicherung des Schubteils im Gehäuse und einer zweiten Feder zur Sicherung des Aschebehälters im Schubteil aufwendig und teuer.

Bei einem anderen, durch die FR-A 1 393 827 bekanntgewordenen Ascher dient ein in einem Gehäuse verschiebbar angeordnetes Schubteil zugleich als Aschebehälter, welcher aus dem Gehäuse herausziehbar ist, indem eine von Hand betätigbare Feder von einem Anschlag wegbewegt wird. Dieser Ascher erscheint bedienungsfreundlich, weil das Schubteil nach dem Lösen einer Verriegelung, die allerdings recht kompliziert und vielteilig und damit teuer ausgebildet ist, durch Federkraft in eine Betriebsposition aus dem Gehäuse herausbewegbar ist.

Es ist nun Aufgabe der Erfindung, einen Ascher der eingangs genannten Art hinsichtlich des Bedienungskomforts zu verbessern und durch Einsparung von Einzelteilen und Montagearbeiten kostengünstiger zu gestalten.

Gemäß der Erfindung wird diese Aufgabe dadurch gelöst, daß die Blattfeder mit dem von der Wandung abstehenden freien Endbereich unter Vorspannung an einem Verstellorgan anliegt und durch mehrfache, über ihre Länge verteilte Abwinklungen zusätzlich zum Rastnocken einen weiteren Rastnocken aufweist, der zur lösbaren Halterung des im Gehäuse eingeschobenen Schubteils in eine Aussparung des Gehäuses eingreift, und daß zum Überführen des Schubteils mit Aschereinsatz in die Gebrauchslage mittels einer Öffnungsfeder der Rastnocken durch eine Betätigung des Verstellorgans entrastbar ist.

In weiterer Ausgestaltung der Erfindung kann vorgesehen sein, daß der freie Endbereich der Blattfeder zum vorderen mit einer Frontplatte versehenen Ende des Aschereinsatzes hin ausgerichtet ist und hier mit dem an der Frontplatte gelagerten Verstellorgan in Verbindung steht, das aus einer Drucktaste und einem über diese zu bewegenden Schieber besteht, der einen Ansatz zum Abstützen und Anheben des freien Endbereichs der Blattfeder aufweist.

Durch einfaches Ausrasten des ersten Rastnockens aus seiner Rastlage mittels eines einfach zu betätigenden Verstellorgans wird der Ascher zufolge der am Schubteil angreifenden Feder automatisch in die Gebrauchslage überführt. Der erfindungsgemäße Ascher bietet somit einen hohen Bedienungskomfort.

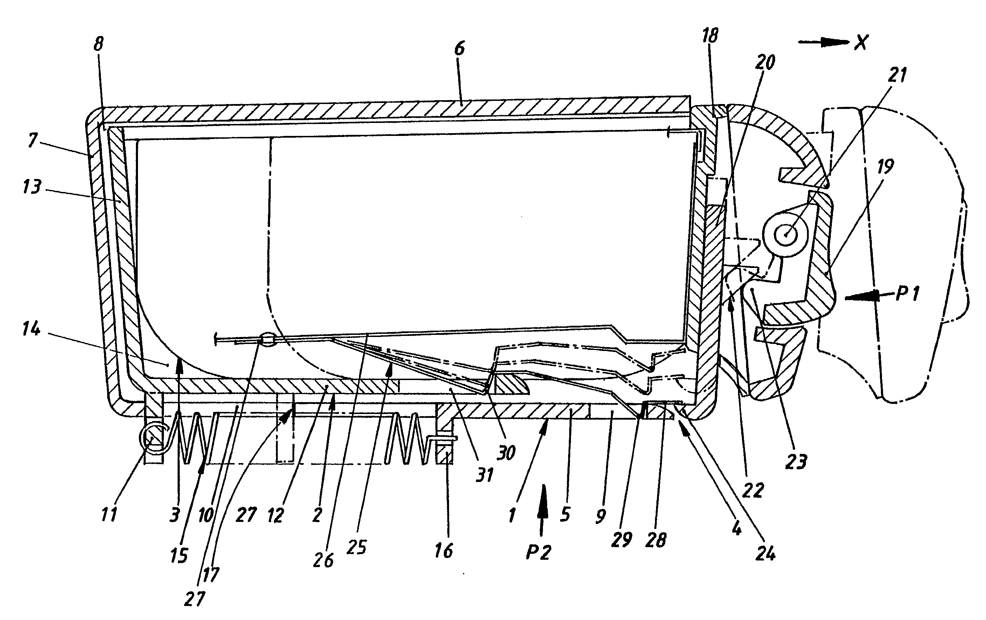

Die Erfindung wird nachfolgend anhand eines auf der Zeichnung dargestellten Ausführungsbeispiels näher erläutert.

Der neue, im Längsschnitt dargestellte Ascher besteht im wesentlichen aus einem Gehäuse 1, einem darin beweglich aufgenommenen Schubteil 2 und einem im Schubteil 2 angeordneten Aschereinsatz 3.

Das Gehäuse 1 weist eine bei 4 offene Kastenform auf und besitzt eine Bodenwand 5, eine Kopfwand 6, eine Rückwand 7 und zwei Seitenwände 8, von denen in der Zeichnung nur eine dargestellt ist. In der Bodenwand 5 des Gehäuses 1 ist eine erste Ausnehmung 9 und eine zweite Ausnehmung 10 vorgesehen, die jeweils die Bodenwand 5 durchsetzen und eine schlitzartige Ausbildung aufweisen. Die erste, in der Nähe der Kastenöffnung (bei 4) angeordnete Ausnehmung 9 dient zum Einrasten eines ersten Rastnockens einer noch zu beschreibenden Blattfeder und die zweite Ausnehmung 10, die sich am anderen Endbereich der Bodenwand 5 befindet und sich bis etwa zur Rückwand 7 erstreckt, dient zur Führung eines am Schubteil 2 angeordneten Zapfens 11.

Das Schubteil 2, das beweglich im Gehäuse 1 geführt ist, weist eine wesentlich geringere Länge als das Gehäuse 1 auf und ist mit einer parallel zur Bodenwand 5 verlaufenden Bodenwand 12, einer parallel zur Rückwand 7 verlaufenden Rückwand 13 und mit parallel zu den Seitenwänden 8 verlaufenden Seitenwänden 14 (von denen nur eine dargestellt ist) ausgebildet. Das Schubteil 2 ist ebenso wie das Gehäuse 1 nach vorne hin offen und zweckmäßigerweise darüber hinaus auch nach oben hin offen gestaltet. Selbstverständlich können zwischen dem Gehäuse 1 und dem Schubteil 2 im einzelnen nicht dargestellte Gleitführungen ausgebildet sein, die eine leichtgängige und geräuscharme Verschiebbarkeit des Schubteils 2 im Gehäuse 1 gewährleisten.

Das Schubteil 2 ist durch eine in Pfeilrichtung X wirkende Feder 15 belastet. Im dargestellten Ausführungsbeispiel ist die Feder 15 als Schraubenzugfeder ausgebildet und von zwei Zapfen aufgenommen, von denen der eine 11 an der Bodenwand 12 des Schubteils 2 und der andere 16 an der Bodenwand 5 des Gehäuses 1 angeordnet ist. Der zweckmäßigerweise lösbar mit dem Schubteil 2 verbundene Zapfen 11 dient zudem als Anschlag zur Begrenzung des Hubweges des Schubteils 2 in Pfeilrichtung X, indem er sich in der Gebrauchslage des Aschers an der die Ausnehmung 10 einendig begrenzenden Wandung 17 abstützt.

Der nur nach oben hin offene Aschereinsatz 3 weist etwa zu den Wänden des Gehäuses 1 und des Schubteils 2 parallel verlaufende Wände und zudem eine Frontplatte 18 auf. An der Frontplatte 18 ist ein Verstellorgan gelagert, welches im wesentlichen aus einer Drucktaste 19 und einem damit zusammenwirkenden Schieber 20 besteht. Die Drucktaste 19 ist auf einer horizontal ausgerichteten Achse 21 schwenkbeweglich gelagert, die ihrerseits in mit der Frontplatte 18 verbundenen Lagerböckchen oder dergleichen sitzt. Die Drucktaste 19 weist eine an einer am Schieber 20 ausgebildeten Keilfläche 22 anliegende Nase 23 auf. Bei einer z.B. mittels Daumendruck erfolgenden Betätigung der Drucktaste 19 in Pfeilrichtung P1 wird der Schieber 20, der an seinem unteren Ende einen zum Gehäuse 1 hin ausgerichteten Ansatz 24 aufweist, nach oben, das heißt in Pfeilrichtung P2 bewegt.

Das vorbeschriebene Verstellorgan dient dazu, eine den Ascher bzw. das Schubteil 2 mit Aschereinsatz 3 in der Nichtgebrauchslage sichernde Raste zu entrasten, wodurch dann die Feder 15 das Schubteil 2 mit darin befindlichen Aschereinsatz in Pfeilrichtung X zu bewegen vermag. Die Raste besteht aus einer Blattfeder 25, die mit einem Endbereich 27 an einem erhöhten Bodenbereich 26 des Aschereinsatzes 3 befestigt ist, mit ihrem anderen von dem erhöhten Bodenbereich 26 abstehenden freien Endbereich 28 unter Verspannung auf dem Ansatz 24 des Schiebers 20 aufliegt und zwei über ihre Länge verteilte, durch mehrfache Abwinklungen gebildete Rastnocken 29 und 30 aufweist. Wie die Zeichnung zeigt, befindet sich der erste Rastnocken 29 in der Nichtgebrauchslage des Aschers, die gegeben ist, wenn das Schubteil 2 mit Aschereinsatz 3 im wesentlichen innerhalb des Gehäuses angeordnet ist, innerhalb der ersten, in der Bodenwand 5 des Gehäuses 1 vorgesehenen Ausnehmung 9. Der zweite Rastnocken 30 befindet sich hingegen in einer in der Bodenwand 12 des Schubteils 2 nahe deren Öffnung eingearbeiteten Ausnehmung 31.

Für die Überführung des Aschers in die Gebrauchslage, in der der Aschereinsatz 3 von oben her frei zugänglich ist, ist es lediglich erforderlich, die Drucktaste 19 in Pfeilrichtung P1 zu betätigen, wodurch dann der Schieber 20 und mit diesem der freie Endbereich 28 der Blattfeder 25 angehoben wird. Beim Anheben des freien Endbereichs 28 der Blattfeder 25 wird auch der erste Rastnocken 29 aus seiner Rastlage in die Ausnehmung 9 befreit, so daß die Feder 15 unter Entspannung in Funktion treten kann. Bei Nichtgebrauch des Aschers wird der Aschereinsatz 3 mit Schubteil 2 durch Druckausübung auf die Frontplatte 18 wieder in das Gehäuse 1 hineingeschoben, wobei die Feder 15 wieder gespannt wird und der erste Rastnocken wieder in die Ausnehmung 9 einrastet.

Die Öffnungs- und Schließbewegungen haben keinen Einfluß auf die Arretierung des Aschereinsatzes 3 im Schubteil 2. Aufgrund der langen Federwege und der besonderen Gestaltung der neuen Blattfeder 25 bleibt die Verrastung des zweiten Rastnockens 30 in der Ausnehmung 31 des Schubteils 2 auch dann aufrechterhalten, wenn der erste Rastnocken 29 in der geschilderten Weise entrastet wird. Das Herausziehen des Aschereinsatzes 3 aus dem Schubteil 2 läßt sich aber schnell und mühelos dadurch bewerkstelligen, daß die Blattfeder 25 von Hand nach oben und damit der zweite Rastnocken 30 aus der Ausnehmung 31 herausbewegt wird, wobei zu erwähnen ist, daß die Blattfeder 25 bei geöffnetem Schubteil 2 von Hand frei zugänglich ist.

**Patentansprüche**

1. Ascher, insbesondere für Fahrzeuge, bestehend aus einem in einer Wandaussparung befestigbaren Gehäuse (1), einem darin beweglich geführten, sowohl in der eingeschobenen als auch in der herausgezogenen Lage im Gehäuse (1) fixierten Schubteil (2), einem darin herausnehmbar angeordneten Aschereinsatz (3) und eine Raste zur Sicherung des Aschereinsatzes (3) im Schubteil (2), die aus einer länglichen Blattfeder (25) besteht, mit einem Endbereich (27) an einer Wandung (26) des Aschereinsatzes (3) befestigt ist und einen Rastnocken (30) aufweist, der zur lösbaren Halterung des Aschereinsatzes (3) im Schubteil (2) in eine Aussparung (31) des Schubteils (2) eingreift und von Hand entrastbar ist, dadurch gekennzeichnet, daß die Blattfeder (25) mit dem von der Wandung (26) abstehenden freien Endbereich (28) unter Vorspannung an einem Verstellorgan (20) anliegt und durch mehrfache, über ihre Länge verteilte Abwinklungen zusätzlich zum Rastnocken (30) einen weiteren Rastnocken (29) aufweist, der zur lösbaren Halterung des im Gehäuse (1) eingeschoben Schubteils (2) in eine Aussparung (9) des Gehäuses (1) eingreift, und daß zum Überführen des Schubteils (2) mit Aschereinsatz (3) in die Gebrauchslage mittels einer Öffnungsfeder (15) der Rastnocken (29) durch eine Betätigung des Verstellorgans entrastbar ist.

2. Ascher nach Anspruch 1, dadurch gekennzeichnet, daß der freie Endbereich (28) der Blattfeder (25) zum vorderen mit einer Frontplatte (18) versehenen Ende des Aschereinsatzes (3) hin ausgerichtet ist und hier mit dem an der Frontplatte (18) gelagerten Verstellorgan in Verbindung steht, das aus einer Drucktaste (19) und einem über diese zu bewegenden Schieber (20) besteht, der einen Ansatz (24) zum Abstützen und Anheben des freien Endbereichs (28) der Blattfeder (25) aufweist.

**Claims**

1. An ash-tray, especially for a vehicle, comprising a casing (1) fastenable in a wall recess, a slide member (2) movably held in the casing (1) yet remaining attached thereto both in its pushed-in and pulled-out positions, an ash-tray insert (3) removably arranged in the member (2), and a pawl for securing the insert (3) in the member (2), the pawl being an elongate leaf spring (25) one end portion (27) of which is fastened to a wall (26) of the insert (3) and which is provided with a latching cam (30) arranged to engage, for the purpose of removably holding the ash-tray insert (3) in the slide member (2), a recess (31) in the member (2) and being manually disengageable therefrom, characterized in that the leaf spring's (25) free end portion (28) remote from the wall (26) rests under bias on a shifting device (20), that the leaf spring in addition to the one latching cam (30) is provided – as a result of a number of angular bends spaced along its overall length – with a further latching cam (29) which for the purpose of removably holding the slide member (2), when it has been pushed into the casing (1), engages a recess (9) in the casing (1), and in that the further cam (29) is arranged to be disengaged by actuating the shifting device so as to allow the member (2) including the insert (3) to be moved, by means of an opening spring (15), into their position of use.

2. An ash-tray according to claim 1, characterized in that the free end portion (28) of the spring (25) points to the insert's (3) front end provided with a front panel (18) and is at this point in contact with the shifting device mounted on the front panel (18), that the device comprises a press key (19) and a slide bracket (20) to be moved thereby, and in that the bracket is provided with a shoulder (24) serving to support and lift the free end portion (28) of the spring (25).

## Revendications

1. Cendrier, en particulier pour véhicules automobiles, constitué d'un boîtier (1) fixé dans un évidement de paroi, d'un élément coulissant (2) fixé dans le boîtier en position rentrée comme en position ressortie, et guidé mobile à l'intérieur de celui-ci, d'une garniture de cendrier (3) placée à l'intérieur de manière amovible, et d'un dispositif d'arrêt pour bloquer la garniture de cendrier (3) dans l'élément coulissant (2), lequel dispositif d'arrêt est constitué d'un ressort à lame (25) allongé, est fixé par une zone terminale (27) sur une paroi (36) de la garniture de cendrier (3) et présente une came d'arrêt (30) qui pénètre dans un évidement (31) de l'élément coulissant (2), pour assurer une fixation amovible de la garniture de cendrier (3), et qui peut être déverrouillé à la main, caractérisé en ce que le ressort à lame (25) s'applique précontraint, par la zone terminale (28) libre faisant saillie de la paroi (26), contre un organe de déplacement (20) et présente, par plusieurs parties coudées réparties sur sa longueur, une autre came d'arrêt (29) en plus de la came d'arrêt (30), laquelle pénètre dans un évidement (9) du boîtier (1) pour fixer de manière amovible l'élément coulissant (2) emboîté dans le boîtier (1) et en ce que pour faire passer l'élément coulissant (2) avec la garniture de cendrier (3) dans la position d'utilisation, au moyen d'un ressort d'ouverture (15), la came d'arrêt (29) est déverrouillable par actionnement de l'organe de déplacement.

2. Cendrier selon la revendication 1, caractérisé en ce que la zone terminale (28) libre du ressort à lame (25) est dirigée vers l'extrémité avant de la garniture de cendrier (3), pourvue d'une plaque avant (18), et est reliée à l'organe de déplacement monté sur la plaque avant (18), l'organe de déplacement étant constitué d'un bouton-poussoir (19) et d'un coulisseau (20) se déplaçant sur celui-ci et présentant un talon (24) servant à soutenir et à relever la zone terminale (28) libre du ressort à lame (25).

EP 0 243 857 B1